# EUROPÄISCHE PATENTSCHRIFT

(11) **EP 3 058 650 B1**
(45) Veröffentlichungstag und Bekanntmachung des Hinweises auf die Patenterteilung: **02.09.2020**
(21) Anmeldenummer: 14783887.4
(22) Anmeldetag: 14.10.2014
(51) Int. Cl.: H02P 6/182, F02D 41/14, F02D 41/30, H02P 6/06

(54) **VERFAHREN ZUR STEUERUNG EINES ELEKTROMOTORS EINER FAHRZEUGPUMPE**
METHOD FOR CONTROLLING AN ELECTRIC MOTOR OF A VEHICLE PUMP
PROCÉDÉ DE COMMANDE D'UN MOTEUR ÉLECTRIQUE D'UNE POMPE DE VÉHICULE

(30) Priorität: 15.10.2013 DE 102013220825
(43) Veröffentlichungstag der Anmeldung: 24.08.2016
(73) Patentinhaber: Vitesco Technologies GmbH, 30165 Hannover (DE)
(72) Erfinder: GRAF, Rolf, 61479 Glashütten (DE); LUKAS, Bernhard, 64546 Mörfelden-Walldorf (DE)
(86) Internationale Anmeldenummer: PCT/EP2014/072038
(87) Internationale Veröffentlichungsnummer: WO 2015/055666

(56) Entgegenhaltungen:
- EP-A2- 2 192 686
- DE-A1-102005 043 817
- "Regler", , 4. Oktober 2013 (2013-10-04), XP007922929, Gefunden im Internet: URL:http://de.wikipedia.org/w/index.php?ti tle=Regler&oldid=123150678 [gefunden am 2014-12-03]

## Beschreibung

Die Erfindung betrifft ein Verfahren zur Steuerung eines Elektromotors einer Fahrzeugpumpe, ein Programmelement, eine Fördervorrichtung eines Fahrzeugs und ein Fahrzeug.

Typische Kraftstoffpumpen für Dieselkraftstoff können ein Pumpwerk aufweisen, das nach dem Verdrängerprinzip arbeitet. Ein Beispiel hierfür kann die sogenannte Gerotorpumpe bzw. Zahnringpumpe sein. Auch Schrauben- und Rollenzellenpumpwerke können als Kraftstoffpumpen eingesetzt werden. Beim Betrieb von Kraftstoffpumpen können abhängig vom Druck und von der Viskosität des zu befördernden Mediums verschiedene Betriebszustände auftreten. Da Pumpwerke, welche nach dem Verdrängerprinzip arbeiten, typischerweise eine hohe hydraulisch-mechanische Steifheit aufweisen können, kann sich eine Änderung in der Viskosität oder des Druckes des geförderten Mediums direkt auf das notwendige Drehmoment, welches für den Antrieb der Pumpe notwendig ist, auswirken.

Heutzutage können bei Kraftstoffpumpen elektrisch kommutierte Motoren eingesetzt werden, welches Synchronmaschinen sind, die aufbaubedingt Schwankungen des verfügbaren Abgabedrehmoments über den Drehwinkel des Rotors besitzen können. Ferner können typische Verdrängerpumpen Lastmomentschwankungen über den Drehwinkel aufweisen. Eine momentane Überschreitung des verfügbaren Abgabedrehmoments des Elektromotors durch das Lastmoment der Pumpe kann zu einem Synchronisationsverlust zwischen Rotor und antreibendem Feld führen. Dies kann einen Drehzahlabfall und einen Kontrollverlust der Elektronik über den Elektromotor mit anschließendem Pumpenstillstand zur Folge haben.

Ferner können bei Pumpen mit Gerotortriebwerk weitere störende Effekte auftreten, wenn diese mit niederer Drehzahl betrieben werden. Durch Fertigungstoleranzen kann es auch zu Schwankungen des benötigten Drehmoments über mehrere Umdrehungen des Gerotors kommen. Diese periodischen Lastmoment-Schwankungen zusammen mit den rotorwinkelabhängigen Schwankungen des Abgabedrehmoments des Elektromotors können sowohl zu Schwankungen im Rundlauf der Pumpe über mehrere Umdrehungen derselben als auch zu Schwankungen über Teilumdrehungen führen. Typischerweise kann die Elektronik der Pumpe als Drehzahlregler der Kraftstoffpumpe entsprechend einem Drehzahl-Vorgabesignal aus der Motorsteuerung arbeiten. Bei niederer Drehzahl der Pumpe bzw. des Elektromotors und bei bestimmten Drücken im Pumpwerk kann dieses mechanisch induzierte Verhalten bis zu einem Kontrollverlust der Elektronik über die Pumpe und damit zu einem Pumpstillstand führen.

Die Druckschrift EP 2 192 686 A2 offenbart ein Verfahren und eine Vorrichtung zur wiederholten Bestimmung dynamischer Größen eines Synchronmotors. Das Verfahren umfasst das Ermitteln einer Periode für zumindest eine Teilumdrehung eines Rotors des Synchronmotors mittels EMK-Messung.

Auf der Internetpräsenz der freien Enzyklopädie Wikipedia ist unter dem Eintrag für den Begriff "Regler" ein P-Regler sowie ein PI-Regler offenbart (Datum: 4. Oktober 2013; Quelle: http://de.wikipedia.org/w/index.php?title=Regler&O1did=123150 678). Ein P-Regler besteht aus einem proportionalen Verstärkungsanteil, während ein PI-Regler eine zeitlich abhängige Verstärkung aufweist.

Die Druckschrift DE 10 2005 043817 A1 offenbart ein Verfahren zum Betreiben einer Kraftstoffpumpe, um Kraftstoff aus einem Kraftstoffbehälter einer Brennkraftmaschine zuzuführen, bei dem der Kraftstoffpumpe elektrische Energieimpulse periodisch zugeführt werden. Die Pulsbreite der Pulse wird anhand des Kraftstoffbedarfs der Brennkraftmaschine geregelt. Dabei ist die Frequenz der Pulse bei geringer Förderleistung der Kraftstoffpumpe höher als bei höheren Förderleistungen.

Es kann als Aufgabe der Erfindung angesehen werden, den Betrieb/die Ansteuerung von Elektromotoren in Pumpen zu verbessern.

Die Aufgabe wird gelöst durch die Gegenstände der unabhängigen Ansprüche. Weiterbildungen und Ausführungsformen sind der folgenden Beschreibung, den Figuren und den abhängigen Ansprüchen zu entnehmen.

Ein erster Aspekt der Erfindung betrifft ein Verfahren zur Steuerung eines Elektromotors einer Fahrzeugpumpe zum Befördern eines Mediums. Dabei weist das Verfahren die Schritte des Ermittelns einer Periode für zumindest eine Teilumdrehung eines Rotors des Elektromotors und des Änderns einer Drehzahl des Elektromotors, wenn die ermittelte Periode für die Teilumdrehung des Rotors von einem vorgegebenen Vergleichswert um einen Mindestbetrag abweicht, auf.

Es wird daher ein Verfahren zur Regelung der Drehzahl des Elektromotors einer Fahrzeugpumpe bereitgestellt. Mit anderen Worten kann mittels des Verfahrens ein Rundlauf des Elektromotors überprüft bzw. überwacht werden. Wenn der Rundlauf des Elektromotors eine bestimmte Instabilität erreicht, kann die Drehzahl des Elektromotors entsprechend definierter Vorgaben angepasst werden, damit die Instabilität des Rundlaufs des Elektromotors reduziert wird. Das Ändern der Drehzahl der Periode kann beispielsweise ein Senden eines Signals zum Ändern der Drehzahl zum Elektromotor beinhalten. Die genannten Vorgaben, Regeln oder Befehle können in einer Speichereinheit als Teil eines Steuerprogramms für den Elektromotor abgelegt sein.

Dabei können die im Kontext der vorliegenden Erfindung beschriebenen Verfahren von einer elektronischen Steuereinheit durchgeführt werden. Die Schritte der zuvor und im Folgenden genannten Verfahren können in der genannten Reihenfolge durchgeführt werden. Ferner sind auch andere Reihenfolgen und paralleles Durchführen gewisser Schritte möglich. Die Pumpe kann dabei eine Kraftstoffpumpe und/oder ein Dieselpumpe sein. Dabei kann die Pumpe als Gerotorpumpe bzw. als Zahnringpumpe ausgeführt sein. Ferner kann die Pumpe auch als Schrauben- oder Rollenzellenpumpe ausgeführt sein.

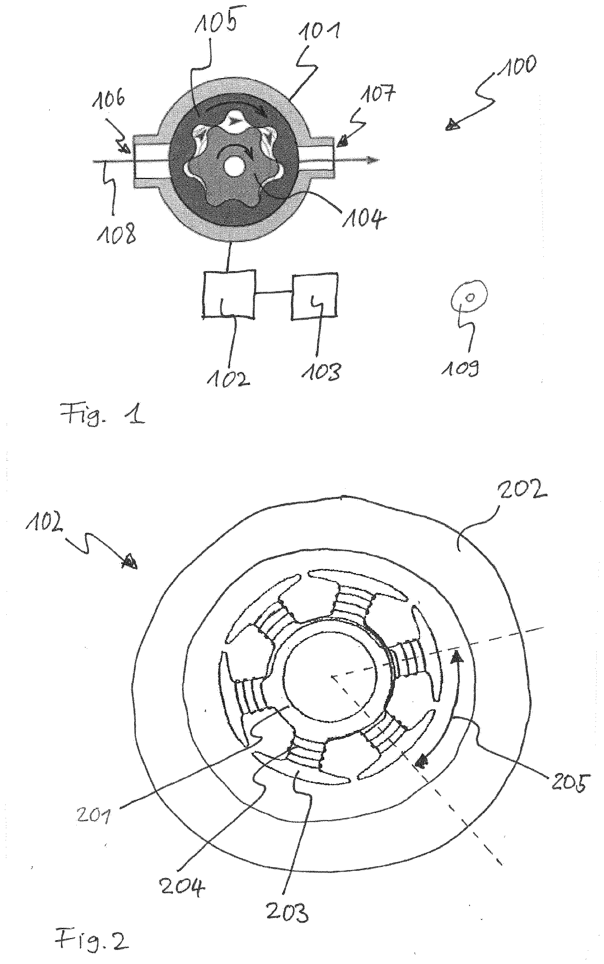

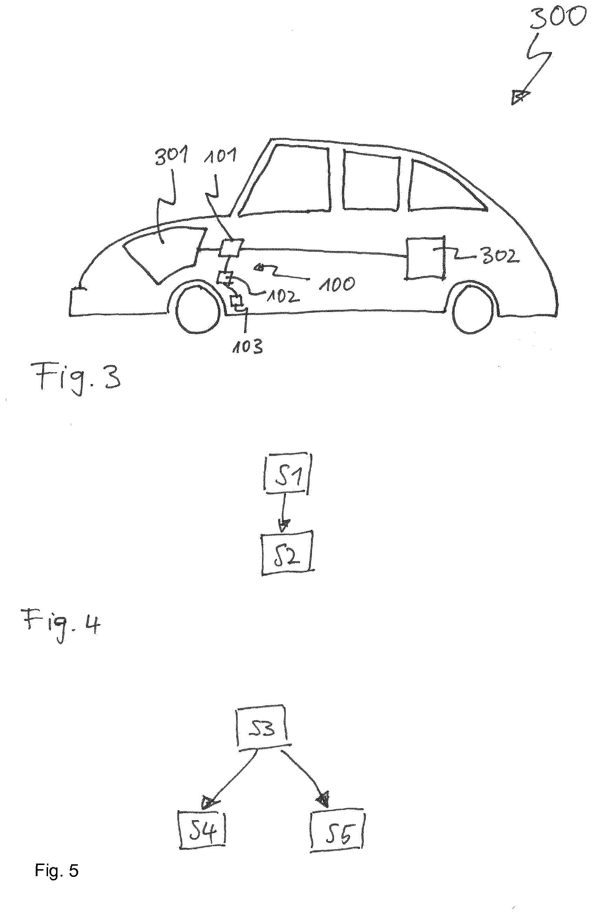

Die Periode für zumindest eine Teilumdrehung kann eine Zeitspanne bezeichnen, die vom Rotor des Elektromotors für die Teilumdrehung, also eine partielle Umdrehung, benötigt wird. Dabei bedeutet das Merkmal "zumindest", dass es sich um eine Teilumdrehung, um eine komplette Umdrehung, um mehr als eine Umdrehung oder um mehrere Umdrehungen des Rotors handeln kann. In dieser Hinsicht bezieht das das Merkmal "zumindest" auf das Merkmal "Teil" des Begriffs Teilumdrehung. Es kann also ausreichend sein, die benötigte Rotationszeit des Rotors für ein Kreissegment zu bestimmen, aber auch andere Messungen, zum Beispiel die Messung der Rotationszeit des Rotors für eine sechstel Umdrehung, für eine viertel Umdrehung, für eine drittel Umdrehung, für eine halbe Umdrehung, für eine dreiviertel Umdrehung für eine ganze Umdrehung und/oder für zwei Umdrehungen sind im Sinne der Erfindung möglich. Der vorgegebene Vergleichswert kann einen Vergleichswert bezeichnen, der von außen vorgegeben wird. Das heißt der Vergleichswert kann von einer anderen Einheit oder durch einen Benutzer vorgegeben werden. Ferner kann der vorgegebene Vergleichswert fest in einer Steuereinheit, die das Verfahren ausführt, implementiert oder gespeichert sein. Der vorgegebene Vergleichswert kann jedoch auch durch die Steuereinheit, die das Verfahren ausführt, ermittelt und bestimmt werden. Diese Bestimmung kann gewissen Regeln folgen, die in einer Speichereinheit abgelegt sein können Unter dem Merkmal, dass die ermittelte Periode von dem vorgegebenen Vergleichswert um einen Mindestbetrag abweicht, kann verstanden werden, dass ein Absolutbetrag einer Differenz zwischen Periode und Vergleichswert größer oder gleich dem Mindestbetrag sein muss, um eine entsprechende Drehzahlregelung zu veranlassen. Mit anderen Worten kann dies bedeuten, dass die ermittelte Periode von dem vorgegebenen Vergleichswert um den Mindestbetrag oder mehr abweicht. Die Drehzahl des Elektromotors kann eine Drehzahl bzw. eine Drehfrequenz des Rotors des Elektromotors bezeichnen. Das heißt, unter der Drehzahl kann die Anzahl Umdrehungen, die der Rotor innerhalb einer vorgegebenen Zeit, beispielsweise innerhalb einer Minute, durchführt bzw. durchführen wird, verstanden werden. Mit anderen Worten kann die Drehzahl eine Rotationsgeschwindigkeit des Rotors bezeichnen. Im Kontext der vorliegenden Erfindung kann die Bezeichnung verwendet werden, dass der Elektromotor unrund läuft, wenn die Periode vom vorgegebenen Vergleichswert um den Mindestbetrag oder mehr abweicht und dass der Elektromotor rund läuft, wenn die Abweichung der Periode vom vorgegebenen Vergleichswert kleiner als der Mindestbetrag ist. In Fig. 4 ist ein Flussdiagramm eines solchen Verfahrens dargestellt, welches beispielsweise mit einer in Fig. 1 gezeigten Fördervorrichtung durchgeführt werden kann.

Durch das Verfahren kann der Rundlauf des Elektromotors bzw. der Pumpe gewährleistet werden. Ferner kann verhindert werden, dass starke Instabilitäten des Elektromotors bzw. der Pumpe auftreten, welche zu einem Stillstand der Pumpe führen können. Das heißt untere Anderem auch, dass die Stabilität des Pumpbetriebs durch das erfindungsgemäße Verfahren erhöht werden kann und es können dadurch Ausfälle der Pumpe reduziert werden.

Gemäß der Erfindung weist das Verfahren weiterhin die Schritte des Erfassens einer elektromotorischen (ist ein Adjektiv, daher klein) Kraft des Elektromotors und des Bestimmens einer Periode der erfassten elektromotorischen Kraft des Elektromotors, wodurch die Periode für die Teilumdrehung des Rotors ermittelt wird, auf.

Mit anderen Worten kann mittels dieses Verfahrens eine elektromotorische Kraft gemessen werden. Diese Messung der elektromotorischen Kraft kann kontinuierlich erfolgen. Ferner ist es auch möglich, dass die elektromotorische Kraft periodisch oder in unregelmäßigen Abständen erfasst wird. Im Rahmen kann für die elektromotorische Kraft die Abkürzung EMK verwendet werden. Dabei kann unter der elektromotorischen Kraft eine Gegen-EMK verstanden werden. Diese elektromotorische Kraft bzw. Gegen-EMK kann dabei eine Spannung bezeichnen die durch die Rotation von Leiterwickelung des Rotors in einem magnetischen Feld des Stators in der Leiterwickelung induziert wird. Dabei kann diese elektromotorische Kraft zeitliche Schwankungen aufweisen, die eine bestimmte Periode aufweisen. Die Regelmäßigkeit der Periode der elektromotorischen Kraft kann dabei ein Maß für den Rundlauf des Elektromotors bzw. der Pumpe sein. Diese Regelmäßigkeit mit dem Verfahren und der Vorrichtung der vorliegenden Erfindung ermittelt und/oder überwacht werden. Dabei kann die elektromotorische Kraft direkt im Elektromotor gemessen werden, ohne dass zusätzliche Sensoren dafür erforderlich sein müssen. Die elektromotorische Kraft kann in einer Ansteuerungselektronik des Elektromotors bekannt sein, so dass sie nicht zusätzlich gemessen werden muss. Auf diese Weise kann der Rundlauf auf eine einfache Weise überwacht werden, ohne dass zusätzliche Sensoren dafür erforderlich sind. Diese Lösung ist kostenneutral, wartungsarm und wenig fehleranfällig.

Eine weitere beispielhafte Ausführungsform der Erfindung betrifft eine Fördervorrichtung mit einer Steuereinheit, wobei die Steuereinheit zum Erfassen einer elektromotorischen Kraft des Elektromotors ausgeführt ist. Auch ist die Steuereinheit dazu ausgeführt, die Periode für die Teilumdrehung des Rotors mittels einer Bestimmung einer Periode der erfassten elektromotorischen Kraft des Elektromotors zu ermitteln. Die im Zusammenhang mit dem Verfahren genannten Vorteile und Merkmale treffen auch auf die Fördervorrichtung zu und die Fördervorrichtung kann das Verfahren durchführen.

Gemäß der Erfindung weist das Verfahren weiterhin den Schritt des Berechnens einer Differenz zwischen der bestimmten Periode der überwachten elektromotorischen Kraft des Elektromotors und des vorgegebenen Vergleichswertes auf. Auch ist der Schritt des Änderns der Drehzahl des Elektromotors, wenn ein Absolutbetrag der berechneten Differenz größer als der Mindestbetrag ist, in diesem Verfahren enthalten. Dabei ist der vorgegebene Vergleichswert ein Mittelwert einer bestimmten Anzahl von Perioden der elektromotorischen Kraft des Elektromotors.

Mit anderen Worten kann das Verfahren auch den Schritt des Ermittelns eines Mittelwerts einer bestimmten Anzahl von Perioden der elektromotorischen Kraft des Elektromotors aufweisen. Dabei kann das Ermitteln des Mittelwerts das Bestimmen eines arithmetischen Mittels der bestimmten Anzahl von Perioden bezeichnen. Die bestimmte Anzahl kann dabei vorgegeben sein. Ferner kann die bestimmte Anzahl der Perioden auch variabel sein. Beispielsweise kann die bestimmte Anzahl der Perioden davon abhängig sein, wie lange die Pumpe bzw. der Elektromotor rund läuft. Diese Abweichung der Periode vom Mittelwert der Periode kann in der Fachsprache als "Jitter" bezeichnet werden. Auf diese Weise kann auf einfache und exakte Weise ermittelt werden, ob die Drehzahl des Elektromotors geändert werden soll oder nicht. Das Ermitteln der Differenz und/oder das Ermitteln des Mittelwerts können durch eine Steuereinheit bzw. durch ein elektronisches Bauteil automatisch erfolgen, wodurch das Verfahren in einer Steuereinheit implementiert werden kann.

Eine weitere beispielhafte Ausführungsform der Erfindung betrifft eine Fördervorrichtung, wobei die Steuereinheit zum Berechnen einer Differenz zwischen der bestimmten Periode der überwachten elektromotorischen Kraft des Elektromotors und des vorgegebenen Vergleichswertes ausgeführt ist. Ferner ist der vorgegebene Vergleichswert ein Mittelwert einer bestimmten Anzahl von Perioden der elektromotorischen Kraft des Elektromotors. Die Steuereinheit ist ferner ausgeführt, die Drehzahl des Elektromotors zu ändern, wenn ein Absolutbetrag der berechneten Differenz größer als der Mindestbetrag ist. Die im Zusammenhang mit dem Verfahren genannten Vorteile und Merkmale treffen auch auf die Fördervorrichtung zu.

Gemäß einer weiteren beispielhaften Ausführungsform der Erfindung weist das Verfahren den Schritt auf, dass die Drehzahl des Elektromotors um einen vordefinierten Festbetrag erhöht wird, wenn die ermittelte Periode für die Teilumdrehung des Rotors von dem vorgegebenen Vergleichswert um den Mindestbetrag abweicht.

Mit anderen Worten kann ein Signal zum Erhöhen der Drehzahl an den Elektromotor gesendet werden, wenn die ermittelte Periode für die Teilumdrehung des Rotors von dem vorgegebenen Vergleichswert um den Mindestbetrag abweicht bzw. wenn eine Instabilität des Rundlaufs ermittelt wurde. Durch Erhöhen der Drehzahl kann möglicherweise eine Reduzierung des Jitters erreicht werden. Mit anderen Worten kann durch das Erhöhen der Drehzahl die Periodendauer stabilisiert bzw. der Rundlauf verbessert werden. Auf diese Weise kann mittels des Verfahrens einerseits ein instabiler Rundlauf detektiert werden und anderseits kann dies auch korrigiert werden.

Eine weitere beispielhafte Ausführungsform der Erfindung betrifft eine Fördervorrichtung, wobei die Steuereinheit zum Erhöhen der Drehzahl des Elektromotors um einen vordefinierten Festbetrag ausgeführt ist, wenn die ermittelte Periode für die Teilumdrehung des Rotors von dem vorgegebenen Vergleichswert um den Mindestbetrag abweicht.

Gemäß einer weiteren beispielhaften Ausführungsform der Erfindung weist das Verfahren den Schritt auf des kontinuierlichen Erhöhens der Drehzahl des Elektromotors, bis die Abweichung der Periode vom vorgegebenen Vergleichswert kleiner ist als der Mindestbetrag, wenn die ermittelte Periode für die Teilumdrehung des Rotors von dem vorgegebenen Vergleichswert um den Mindestbetrag abweicht.

Mit anderen Worten kann die Drehzahl des Elektromotors kontinuierlich erhöht werden, bis der Elektromotor bzw. die Pumpe wieder rund läuft bzw. bis der Rundlauf des Elektromotors wieder stabil ist. Auf diese Weise kann der Elektromotor mit einer flexiblen Drehzahl betrieben werden, bei der der Jitter sich unterhalb des Mindestbetrags befindet.

Eine weitere beispielhafte Ausführungsform der Erfindung betrifft eine Fördervorrichtung, wobei die Steuereinheit zum kontinuierlichen Erhöhen der Drehzahl des Elektromotors ausgeführt ist, bis die Abweichung der Periode vom vorgegebenen Vergleichswert kleiner ist als der Mindestbetrag, wenn die ermittelte Periode für die Teilumdrehung des Rotors von dem vorgegebenen Vergleichswert um den Mindestbetrag abweicht.

Gemäß einer weiteren beispielhaften Ausführungsform der Erfindung weist das Verfahren den Schritt des Erzeugens und Sendens eines Warnsignals an eine Motorsteuerungseinheit auf, wenn die ermittelte Periode für die Teilumdrehung des Rotors von dem vorgegebenen Vergleichswert um den Mindestbetrag abweicht.

Auf diese Weise kann die Motorsteuerungseinheit beispielsweise den Betrieb des Motors die Pumpe bzw. den Elektromotors anpassen. Beispielsweise kann die Motorsteuerungseinheit die Leistung bzw. den Kraftstoffverbrauch des Motors herunter regeln, wenn der Elektromotor der Pumpe unrund läuft.

Eine weitere beispielhafte Ausführungsform der Erfindung betrifft eine Fördervorrichtung, wobei die Steuereinheit zum Erzeugen und zum Senden eines Warnsignals an eine Motorsteuerungseinheit ausgeführt ist, wenn die ermittelte Periode für die Teilumdrehung des Rotors von dem vorgegebenen Vergleichswert um den Mindestbetrag abweicht.

Gemäß einer weiteren beispielhaften Ausführungsform der Erfindung weist das Verfahren den Schritt des Ermittelns einer momentanen Drehzahl des Elektromotors auf. Ferner erfolgt im Verfahren der Schritt des Erhöhens der Drehzahl des Elektromotors, falls die ermittelte momentane Drehzahl des Elektromotors einen ersten Drehzahlgrenzwert unterschreitet, wenn die ermittelte Periode für die Teilumdrehung des Rotors von dem vorgegebenen Vergleichswert um den Mindestbetrag abweicht, oder es erfolgt der Schritt des Senkens der Drehzahl des Elektromotors, falls die ermittelte momentane Drehzahl des Elektromotors einen zweiten Drehzahlgrenzwert überschreitet, wenn die ermittelte Periode für die Teilumdrehung des Rotors von dem vorgegebenen Vergleichswert um den Mindestbetrag abweicht.

Mit anderen Worten kann das Verfahren zwei Drehzahlbereiche, zum Beispiel einen niedrigen Drehzahlbereich und einen hohen Drehzahlbereich, aufweisen. So kann gemäß dem Verfahren die Drehzahl des Elektromotors erhöht werden, wenn sich die momentane Drehzahl des Elektromotors im niedrigen Drehzahlbereich befindet . Wenn die momentane Drehzahl sich im hohen Drehzahlbereich befindet, kann die Drehzahl des Elektromotors entsprechend gesenkt werden, wenn der Elektromotor unrund läuft. Ob sich die Drehzahl momentan im hohen oder niedrigen Bereich findet kann aufgrund eines Vergleichs mit gespeicherten Werten festgestellt werden. In Fig. 5 ist ein Flussdiagramm gemäß einem Ausführungsbeispiel der Erfindung für ein solches Verfahren mit zwei Drehzahlbereichen dargestellt.

Eine weitere beispielhafte Ausführungsform der Erfindung betrifft eine Fördervorrichtung, die solch ein Verfahren durchführt, wobei die Steuereinheit zum Ermitteln einer momentanen Drehzahl des Elektromotors ausgeführt ist. Die Steuereinheit ist zum Erhöhen der Drehzahl des Elektromotors ausgeführt, falls die ermittelte momentane Drehzahl des Elektromotors einen ersten Drehzahlgrenzwert unterschreitet, wenn die ermittelte Periode für die Teilumdrehung des Rotors von dem vorgegebenen Vergleichswert um den Mindestbetrag abweicht. Ferner ist die Steuereinheit zum Senken der Drehzahl des Elektromotors ausgeführt, falls die ermittelte momentane Drehzahl des Elektromotors einen zweiten Drehzahlgrenzwert überschreitet, wenn die ermittelte Periode für die Teilumdrehung des Rotors von dem vorgegebenen Vergleichswert um den Mindestbetrag abweicht.

Gemäß einer weiteren beispielhaften Ausführungsform der Erfindung weist das Verfahren den Schritt des Senkens der Drehzahl des Elektromotors auf. Ferner weist das Verfahren den Schritt des Beibehaltens der gesenkten Drehzahl des Elektromotors nach dem Senken der Drehzahl auf, wenn die ermittelte Periode für die Teilumdrehung des Rotors von dem vorgegebenen Vergleichswert um einen Betrag abweicht, der kleiner ist als der Mindestbetrag. Alternativ weist das Verfahren den Schritt des Erhöhens der gesenkten Drehzahl des Elektromotors nach dem Senken der Drehzahl auf, wenn die ermittelte Periode für die Teilumdrehung des Rotors von dem vorgegebenen Vergleichswert um den Mindestbetrag abweicht.

Auf diese Weise kann gemäß dem Verfahren geprüft werden, ob der Elektromotor mit einer niedrigeren Drehzahl betrieben werden kann. Wenn der Elektromotor auch mit der niedrigeren Drehzahl rund läuft, kann die niedrigere Drehzahl beibehalten werden. Ansonsten kann die Drehzahl wieder erhöht werden. Dadurch kann der Elektromotor, wenn möglich, mit einer niedrigeren Drehzahl betrieben werden, wodurch der Verschleiß der Pumpe reduziert werden kann.

Ein weiterer Aspekt der Erfindung betrifft ein Programmelement, das, wenn es auf einem Prozessor ausgeführt wird, den Prozessor anleitet, ein Verfahren nach einem der vorangehenden Ansprüche auszuführen.

Dabei kann das Programmelement auf eine Steuereinheit geladen werden, die die Schritte des Verfahrens ausführt. Das Programmelement kann ein Teil eines Computerprogramms sein. Ferner kann das Programmelement auch selbst ein selbständiges Computerprogramm sein. Beispielsweise kann das Programmelement als Update ein bereits bestehendes Computerprogramm zum Ausführen des erfindungsgemäßen Verfahrens befähigen.

Ein weiterer Aspekt der Erfindung betrifft ein computerlesbares Medium, auf dem ein Programmelement gespeichert ist, das, wenn es auf einem Prozessor ausgeführt wird, den Prozessor anleitet, ein Verfahren nach einem der vorangehenden Ansprüche auszuführen.

Das computerlesbare Medium kann als Speichermedium, z. B. als USB-Stick, als CD, als DVD, als Festplatte, oder als sonstiges Speichermedium angesehen werden. Ferner kann das computerlesbare Medium auch als Mikrochip ausgeführt sein, der eine Steuerungselektronik befähigt, das erfindungsgemäße Verfahren auszuführen.

Ein weiterer Aspekt der Erfindung betrifft eine Fördervorrichtung eines Fahrzeugs. Dabei weist die Fördervorrichtung eine Pumpe zum Befördern eines Mediums, einen Elektromotor zum Antreiben der Pumpe und eine Steuereinheit zum Steuern des Elektromotors, wobei der Elektromotor einen Rotor aufweist. Die Steuereinheit ist dabei ausgeführt, eine Periode für zumindest eine Teilumdrehung des Rotors zu ermitteln. Ferner ist die Steuereinheit ausgeführt, eine Drehzahl des Elektromotors zu ändern, wenn die ermittelte Periode für die Teilumdrehung des Rotors von einem vorgegebenen Vergleichswert um einen Mindestbetrag abweicht.

Dabei können die Pumpe, der Elektromotor und die Steuereinheit unterschiedliche bauliche Einheiten beschreiben. Außerdem ist es nicht erforderlich, dass die Steuereinheit in der Fördervorrichtung integriert ist. Beispielsweise kann die Steuereinheit ein Teil der Motorsteuerung sein. Weiterhin können die im Zusammenhang mit dem Verfahren beschriebenen Merkmale und Vorteile auch auf die Fördervorrichtung zutreffen.

Ein weiterer Aspekt der Erfindung betrifft ein Fahrzeug mit einer Fördervorrichtung, wie sie zuvor und im Folgenden beschrieben ist, wobei die Pumpe der Fördervorrichtung eine Kraftstoffpumpe zum Befördern von Kraftstoff zu einem Verbrennungsmotor des Fahrzeugs ist.

Dabei sind die im Zusammenhang mit dem Verfahren genannten Vorteile und Merkmale auch auf das Fahrzeug anwendbar. Das Fahrzeug kann auch mit einer Steuereinheit, die das im Kontext der vorliegenden Erfindung beschriebene Verfahren ausführt, nachgerüstet werden bzw. nachgerüstet worden sein.

Die beschriebenen Ausführungsformen betreffen gleichermaßen ein Verfahren, ein Programmelement, ein computerlesbares Medium, eine Fördervorrichtung und ein Fahrzeug, obwohl einzelne Ausführungsformen ausschließlich in Bezug zu dem Verfahren, dem Programmelement, dem computerlesbaren Medium, der Fördervorrichtung oder dem Fahrzeug beschrieben werden. Synergetische Effekte können sich aus verschiedenen Kombinationen der Ausführungsformen ergeben, auch wenn diese im Folgenden nicht beschrieben werden.

Weitere Merkmale, Vorteile und Anwendungsmöglichkeiten der Erfindung ergeben sich aus der nachfolgenden Beschreibung der Ausführungsbeispiele und der Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.
- Fig. 1: zeigt eine Fördervorrichtung gemäß einem Ausführungsbeispiel der Erfindung.
- Fig. 2: zeigt einen Elektromotor gemäß einem Ausführungsbeispiel der Erfindung.
- Fig. 3: zeigt ein Fahrzeug gemäß einem Ausführungsbeispiel der Erfindung.
- Fig. 4: zeigt ein Flussdiagramm eines Verfahrens gemäß einem Ausführungsbeispiel der Erfindung.
- Fig. 5: zeigt ein Flussdiagramm eines Verfahrens gemäß einem weiteren Ausführungsbeispiel der Erfindung.

Die Figuren sind schematisch und nicht maßstabsgetreu.

Anhand von Fig. 1 ist eine Fördervorrichtung 100 eines Fahrzeugs gemäß einem Ausführungsbeispiel der Erfindung gezeigt. Dabei weist die Fördervorrichtung 100 eine Pumpe 101 zum Befördern eines Mediums, einen Elektromotor 102 zum Antreiben der Pumpe und eine Steuereinheit 103 zum Steuern des Elektromotors 102 auf, wobei der Elektromotor 102 einen Rotor aufweist. Dabei ist die Steuereinheit 103 ausgeführt, eine Periode für zumindest eine Teilumdrehung des Rotors zu ermitteln. Ferner ist die Steuereinheit 103 ausgeführt, eine Drehzahl des Elektromotors 102 zu ändern, wenn die ermittelte Periode für die Teilumdrehung des Rotors von einem vorgegebenen Vergleichswert um einen Mindestbetrag abweicht.

Gemäß einem weiteren anhand von Fig. 1 gezeigten Ausführungsbeispiel ist die Pumpe 101 als Gerotorpumpe bzw. Zahnringpumpe ausgeführt. Dabei läuft das treibende Zahnrad 104 exzentrisch in der Innenverzahnung 105 der Pumpe. Das Zahnrad 104 wird durch den Elektromotor 102 angetrieben. Durch die Rotation des Zahnrads 104 wird das Medium zwischen den Zahnlücken befördert, wodurch das Medium von einem Einlass 106 der Pumpe 101 zu einem Auslass 107 der Pumpe 101 in Pfeilrichtung 108 transportiert wird. Dabei ist die Gerotorpumpe rein beispielhaft und nicht einschränkend zu sehen. Die Erfindung kann für viele verschiedene Pumpenarten realisiert werden. Durch Fertigungstoleranzen der Pumpe 101, durch die Viskosität, den Druck und die Temperatur des zu befördernden Mediums und auch durch andere Einflüsse kann es zu Schwankungen im Lastdrehmoment der Pumpe 101 kommen. Ferner kann ein Abgabedrehmoment des Elektromotors 102 für verschiedene Winkel des Rotors verschieden sein. Durch die Schwankungen im Lastdrehmoment der Pumpe 101 und durch die Schwankungen im Abgabedrehmoment des Elektromotors 102 kann es zu Schwankungen in der Periode für eine Teilumdrehung, z. B. für eine Teilumdrehung von 60°, d. h. zu einem "Jitter" kommen. Ferner kann der Elektromotor 102 als elektrisch kommutierter Motor bzw. als bürstenloser Elektromotor ausgeführt sein. Durch eine Steuerungseinheit können einem Stator des Elektromotors Wechselspannungen zugeführt werden, die den Rotor in Drehung versetzten. Wenn der "Jitter" zu groß wird, kann dies zu einem Kontrollverlust der Steuereinheit, die den Wechselstrom dem Stator zuführt, führen, was wiederum zu einem Pumpenstillstand führen kann. Um dies zu verhindern, ist die Steuereinheit 103 ausgeführt, den "Jitter" des Elektromotors 102 zu überwachen und die Drehzahl des Elektromotors zu ändern, wenn der "Jitter" zu groß wird. Dabei kann die Steuereinheit 103 ein Bauteil der Fördervorrichtung 100 sein. Es ist jedoch auch möglich, dass die Steuereinheit 103 keine integrierte, bauliche Einheit der Fördervorrichtung 100 ist, sondern beispielsweise ein Teil der Motorsteuerung ist. Beispielsweise können die bereits bestehende Pumpe 101 und der bereits bestehende Elektromotor mit der Steuereinheit 103 nachgerüstet werden, um die Stabilität des Pumpenlaufs zu erhöhen. Das Verfahren, welches die Steuereinheit 103 ausführt, ist beispielsweise als Programmelement ausgeführt und auf einem computerlesbaren Medium 109 gespeichert.

In Fig. 2 ist ein Elektromotor 102 gemäß einem weiteren Ausführungsbeispiel der Erfindung gezeigt. Im gezeigten Fall ist der Elektromotor als Außenrotor-Elektromotor ausgeführt. Dieser Elektromotor ist rein beispielhaft und nicht einschränken anzusehen und die Erfindung ist auf verschiedene Elektromotorarten anwendbar. In diesem Ausführungsbeispiel ist der Rotor 202 des Elektromotors außerhalb des Stators 201 angeordnet. Im Betrieb des Elektromotors 102 rotiert der Rotor 202 um den Stator 201. Der Stator 203 weist mehrere Arme 203 auf, die jeweils mit einer Leiterwicklung 204 versehen sind. In diesem Beispiel weist der Stator 201 sechs Arme auf. Die Anzahl der Arme bzw. deren geometrischen Anordnung ist jedoch rein beispielhaft und kann sich von der gezeigten Figur unterscheiden. Der Rotor 202 ist beispielsweise aus Permanentmagneten aufgebaut. Um den Motor in Gang zu versetzten, werden die Leiterwicklungen 204 der Arme 203 durch die Steuerungseinheit mit einer Wechselspannung versorgt. Der "Jitter" wird beispielsweise durch Messen der Periode des Rotors 202 für eine Teilumdrehung 205 ermittelt. In diesem Ausführungsbeispiel ist eine Teilumdrehung von 60° gezeigt. Die Erfindung ist jedoch auch auf Perioden für andere Teilumdrehungen oder auch für ganze Umdrehungen anwendbar. Die Rotation des Rotors 202, der aus Permanentmagneten besteht, bewirkt eine Induktionsspannung auf die Leiterwickelung 204, was als elektromotorische Kraft bzw. Gegen-EMK bezeichnet wird. Diese Periode für die Teilumdrehung 205 kann die Steuereinheit anhand der vom Stator 201 gemessenen elektromotorischen Kraft ermitteln.

In Fig. 3 ist ein Fahrzeug 300 gemäß einem Ausführungsbeispiel der Erfindung dargestellt. Das Fahrzeug weist einen Verbrennungsmotor 301, einen Kraftstofftank 302 und eine Fördervorrichtung 100 auf, die den Verbrennungsmotor 301 mit Kraftstoff vom Kraftstofftank 302 versorgt. Beispielsweise handelt es sich beim Verbrennungsmotor 301 um einen Dieselmotor. Die Fördervorrichtung 101 beinhaltet eine Pumpe 101, einen Elektromotor 102 zum Antrieb der Pumpe und eine Steuereinheit 103 zum Steuern des Elektromotors 102. Die Steuereinheit kann beispielsweise Teil der Motorsteuerung sein oder nachträglich nachgerüstet worden sein, um die Stabilität des Pumpbelaufs zu verbessern.

In Fig. 4 ist ein Flussdiagramm eines Verfahrens zur Steuerung eines Elektromotors einer Fahrzeugpumpe zum Befördern eines Mediums gemäß einem Ausführungsbeispiel der Erfindung dargestellt. Das Verfahren weist den Schritt S1 des Ermittelns einer Periode für zumindest eine Teilumdrehung eines Rotors des Elektromotors und den Schritt S2 des Änderns einer Drehzahl des Elektromotors, wenn die ermittelte Periode für die Teilumdrehung des Rotors von einem vorgegebenen Vergleichswert um einen Mindestbetrag abweicht.

In Fig. 5 ist ein Flussdiagramm eines weiteren Verfahrens gemäß einem Ausführungsbeispiel der Erfindung dargestellt. Dabei sind Schritte für ein Verfahren, welches zwei Drehzahlbereiche aufweist, dargestellt. Das Verfahren weist den Schritt S3 des Ermittelns einer momentanen Drehzahl des Elektromotors auf. Falls die ermittelte momentane Drehzahl des Elektromotors einen ersten Drehzahlgrenzwert unterschreitet, wird der Schritt S4, des Erhöhens der Drehzahl des Elektromotos ausgeführt, wenn die ermittelte Periode für die Teilumdrehung des Rotors von dem vorgegebenen Vergleichswert um den Mindestbetrag abweicht. Falls die ermittelte momentane Drehzahl des Elektromotors einen zweiten Drehzahlgrenzwert überschreitet, wird der Schritt S5, des Erhöhens der Drehzahl des Elektromotos ausgeführt, wenn die ermittelte Periode für die Teilumdrehung des Rotors von dem vorgegebenen Vergleichswert um den Mindestbetrag abweicht.

## Patentansprüche

1. Verfahren zur Steuerung eines Elektromotors (102) einer Fahrzeugpumpe (101) zum Befördern eines Mediums, das Verfahren aufweisend die Schritte:
Ermitteln einer Zeitspanne für eine Teilumdrehung eines Rotors (202) des Elektromotors (S1);
Erfassen einer elektromotorischen Kraft des Elektromotors (102);
Bestimmen einer Zeitspanne der erfassten elektromotorischen Kraft des Elektromotors (102), wodurch die Zeitspanne für die Teilumdrehung (205) des Rotors (202) ermittelt wird;
**dadurch gekennzeichnet, dass**
eine Drehzahl des Elektromotors (102) geändert wird, wenn die ermittelte Zeitspanne für die Teilumdrehung des Rotors (202) von einem vorgegebenen Vergleichswert um einen Mindestbetrag abweicht (S2);
dass eine Differenz zwischen der bestimmten Zeitspanne der überwachten elektromotorischen Kraft des Elektromotors (102) und des vorgegebenen Vergleichswertes berechnet wird;
dass die Drehzahl des Elektromotors (102) geändert wird, wenn ein Absolutbetrag der berechneten Differenz größer als der Mindestbetrag ist;
und dass der vorgegebene Vergleichswert ein Mittelwert einer bestimmten Anzahl von Zeitspannen der elektromotorischen Kraft des Elektromotors (102) ist.

2. Verfahren nach Anspruch 1, **gekennzeichnet durch** Erhöhen der Drehzahl des Elektromotors (102) um einen vordefinierten Festbetrag, wenn die ermittelte Zeitspanne für die Teilumdrehung (205) des Rotors (202) von dem vorgegebenen Vergleichswert um den Mindestbetrag abweicht.

3. Verfahren nach Anspruch 1, **gekennzeichnet durch**, kontinuierliches Erhöhen der Drehzahl des Elektromotors (102), bis die Abweichung der Zeitspanne vom vorgegebenen Vergleichswert kleiner ist als der Mindestbetrag, wenn die ermittelte Zeitspanne für die Teilumdrehung (205) des Rotors (202) von dem vorgegebenen Vergleichswert um den Mindestbetrag abweicht.

4. Verfahren nach einem der vorangehenden Ansprüche, **gekennzeichnet durch**,
Erzeugen und Senden eines Warnsignals an eine Motorsteuerungseinheit (103), wenn die ermittelte Zeitspanne für die Teilumdrehung (205) des Rotors (202) von dem vorgegebenen Vergleichswert um den Mindestbetrag abweicht.

5. Verfahren nach einem der vorangehenden Ansprüche, **gekennzeichnet durch**,
Ermitteln einer momentanen Drehzahl des Elektromotors (S3) ; Erhöhen der Drehzahl des Elektromotors (102), falls die ermittelte momentane Drehzahl des Elektromotors (102) einen ersten Drehzahlgrenzwert unterschreitet, wenn die ermittelte Zeitspanne für die Teilumdrehung (205) des Rotors (202) von dem vorgegebenen Vergleichswert um den Mindestbetrag abweicht (S4); oder
Senken der Drehzahl des Elektromotors (102), falls die ermittelte momentane Drehzahl des Elektromotors (102) einen zweiten Drehzahlgrenzwert überschreitet, wenn die ermittelte Zeitspanne für die Teilumdrehung (205) des Rotors von dem vorgegebenen Vergleichswert um den Mindestbetrag abweicht (S5).

6. Computerprogrammprodukt, umfassend Befehle, die bei der Ausführung des Programms durch eine Steuereinheit (103) diese veranlasst, ein Verfahren nach einem der vorangehenden Ansprüche auszuführen.

7. Fördervorrichtung (100) eines Fahrzeugs (300), die Fördervorrichtung aufweisend:
eine Pumpe (101) zum Befördern eines Mediums;
einen Elektromotor (102) zum Antreiben der Pumpe (101);
eine Steuereinheit (103) zum Steuern des Elektromotors (102) ;
wobei der Elektromotor (101) einen Rotor (102) aufweist;
wobei die Steuereinheit (103) ein Computerprogrammprodukt nach Anspruch 6 aufweist.

8. Fahrzeug (300) mit einer Fördervorrichtung (100) nach Anspruch 7, wobei die Pumpe (101) der Fördervorrichtung eine Kraftstoffpumpe zum Befördern von Kraftstoff zu einem Verbrennungsmotor (301) des Fahrzeugs (300) ist.

## Claims

1. Method for controlling an electric motor (102) of a vehicle pump (101) for delivering a medium, the method having the steps:
determining of a time period for a partial revolution of a rotor (202) of the electric motor (S1) ;
detecting of an electric-motor force of the electric motor (102);
determining of a time period of the detected electric-motor force of the electric motor (102), by way of which the time period for the partial revolution (205) of the rotor (202) is determined;
**characterized in that**
a rotational speed of the electric motor (102) is changed if the determined time period for the partial revolution of the rotor (202) differs from a predefined comparative value by a minimum value (S2);
**in that** a difference is calculated between the defined time period of the monitored electric-motor force of the electric motor (102) and the predefined comparative value;
**in that** the rotational speed of the electric motor (102) is changed if an absolute value of the calculated difference is greater than the minimum value;
and **in that** the predefined comparative value is a mean value of a defined number of time periods of the electric-motor force of the electric motor (102).

2. Method according to Claim 1, **characterized by** increasing of the rotational speed of the electric motor (102) by a predefined fixed value if the determined time period for the partial revolution (205) of the rotor (202) differs from the predefined comparative value by the minimum value.

3. Method according to Claim 1, **characterized by** continuous increasing of the rotational speed of the electric motor (102) until the deviation of the time period from the predefined comparative value is smaller than the minimum value if the determined time period for the partial revolution (205) of the rotor (202) differs from the predefined comparative value by the minimum value.

4. Method according to one of the preceding claims, **characterized by**
generating and outputting of a warning signal to a motor control unit (103) if the determined time period for the partial revolution (205) of the rotor (202) differs from the predefined comparative value by the minimum value.

5. Method according to one of the preceding claims, **characterized by**
determining of an instantaneous rotational speed of the electric motor (S3);
increasing of the rotational speed of the electric motor (102) if the determined instantaneous rotational speed of the electric motor (102) undershoots a first rotational speed limit value if the determined time period for the partial revolution (205) of the rotor (202) differs from the predefined comparative value by the minimum value (S4); or
lowering of the rotational speed of the electric motor (102) if the determined instantaneous rotational speed of the electric motor (102) exceeds a second rotational speed limit value if the determined time period for the partial revolution (205) of the rotor differs from the predefined comparative value by the minimum value (S5).

6. Computer program product, comprising commands which, in the case of the execution of the program by way of a control unit (103), causes the latter to carry out a method according to one of the preceding claims.

7. Delivery apparatus (100) of a vehicle (300), the delivery apparatus comprising:
a pump (101) for delivering a medium;
an electric motor (102) for driving the pump (101);
a control unit (103) for controlling the electric motor (102) ;
the electric motor (101) having a rotor (102);
the control unit (103) having a computer program product according to Claim 6.

8. Vehicle (300) with a delivery apparatus (100) according to Claim 7, the pump (101) of the delivery apparatus being a fuel pump for delivering fuel to an internal combustion engine (301) of the vehicle (300).

## Revendications

1. Procédé de commande d'un moteur électrique (102) d'une pompe de véhicule (101) destinée à transporter un fluide, le procédé comprenant les étapes suivantes :
l'identification d'un intervalle de temps pour un tour partiel d'un rotor (202) du moteur électrique (S1) ;
la détection d'une force électromotrice du moteur électrique (102) ;
la détermination d'un intervalle de temps de la force électromotrice détectée du moteur électrique (102), moyennant quoi l'intervalle de temps pour le tour partiel (205) du rotor (202) est identifié ;
**caractérisé en ce que**
une vitesse de rotation du moteur électrique (102) est modifiée lorsque l'intervalle de temps identifié pour le tour partiel du rotor (202) s'écarte par un montant minimal d'une valeur comparative prédéfinie (S2) ;
**en ce qu'**une différence entre l'intervalle de temps déterminé de la force électromotrice surveillée du moteur électrique (102) et la valeur comparative prédéfinie est calculée ;
**en ce que** la vitesse de rotation du moteur électrique (102) est modifiée lorsqu'un montant absolu de la différence calculée est supérieur au montant minimal ;
et **en ce que** la valeur comparative prédéfinie est une valeur moyenne d'un nombre déterminé d'intervalles de temps de la force électromotrice détectée du moteur électrique (102).

2. Procédé selon la revendication 1, **caractérisé par** l'augmentation de la vitesse de rotation du moteur électrique (102) d'un montant fixe prédéfini lorsque l'intervalle de temps identifié pour le tour partiel (205) du rotor (202) s'écarte par le montant minimal de la valeur comparative prédéfinie.

3. Procédé selon la revendication 1, **caractérisé par** l'augmentation continuelle de la vitesse de rotation du moteur électrique (102) jusqu'à ce que l'écart de l'intervalle de temps de la valeur comparative prédéfinie soit inférieur au montant minimal lorsque l'intervalle de temps identifié pour le tour partiel (205) du rotor (202) s'écarte par le montant minimal de la valeur comparative prédéfinie.

4. Procédé selon l'une des revendications précédentes, **caractérisé par**
la génération et l'envoi d'un signal d'alerte à une unité de commande de moteur (103) lorsque l'intervalle de temps identifié pour le tour partiel (205) du rotor (202) s'écarte par le montant minimal de la valeur comparative prédéfinie.

5. Procédé selon l'une des revendications précédentes, **caractérisé par**
l'identification d'une vitesse de rotation momentanée du moteur électrique (S3) ;
l'augmentation de la vitesse de rotation du moteur électrique (102) dans le cas où la vitesse de rotation momentanée identifiée du moteur électrique (102) devient inférieure à une première valeur limite de vitesse de rotation, lorsque l'intervalle de temps identifié pour le tour partiel (205) du rotor (202) s'écarte par le montant minimal de la valeur comparative prédéfinie (S4) ; ou
la diminution de la vitesse de rotation du moteur électrique (102) dans le cas où la vitesse de rotation momentanée identifiée du moteur électrique (102) devient supérieure à une deuxième valeur limite de vitesse de rotation, lorsque l'intervalle de temps identifié pour le tour partiel (205) du rotor s'écarte par le montant minimal de la valeur comparative prédéfinie (S5).

6. Produit de programme informatique, comprenant des instructions qui, lors de l'exécution du programme par une unité de commande (103), amène celle-ci à mettre en œuvre un procédé selon l'une des revendications précédentes.

7. Dispositif de transport (100) d'un véhicule (300), le dispositif de transport comprenant :
une pompe (101) destinée à transporter un fluide ;
un moteur électrique (102) destiné à entraîner la pompe (101) ;
une unité de commande (103) destinée à commander le moteur électrique (102) ;
le moteur électrique (101) possédant un rotor (102) ;
l'unité de commande (103) possédant un produit de programme informatique selon la revendication 6.

8. Véhicule (300) comprenant un dispositif de transport (100) selon la revendication 7, la pompe (101) du dispositif de transport étant une pompe à carburant destinée à transporter du carburant vers un moteur à combustion interne (301) du véhicule (300).
